# EUROPEAN PATENT APPLICATION

(11) **EP 4 462 670 A1**
(43) Date of publication of application: **13.11.2024**
(21) Application number: 24174962.1
(22) Date of filing: 08.05.2024
(51) Int. Cl.: H02M 7/483, H02J 3/18

(54) **A SYNCHRONOUS STATIC COMPENSATOR**

(30) Priority: 10.05.2023 IT 202300009345
(71) Applicant: Nidec ASI S.p.A., 20092 Cinisello Balsamo MI (IT)
(72) Inventor: Borghetti, Giovanni, 20092 Cinisello Balsamo (IT); Andreotti, Massimiliano, 20092 Cinisello Balsamo (IT); Postiglione, Gianluca, 20092 Cinisello Balsamo (IT)
(74) Representative: Perani & Partners S.p.A.

(57) **Abstract**

A synchronous static compensator (1) comprises phase legs (10), connected as a star or delta, each with a plurality of conversion modules (12) in series with each other. Each conversion module (12) comprises an output converter (2), a capacitor module (4) connected to the output converter (2), an interface converter (7) connected to the capacitor module (4), and a storage module (5), preferably with supercapacitors, connected to the interface converter (7). In the interface converter (7), a pair of positive switches (76, 77) connects a positive input node (71) to positive and central output nodes (73, 75), and a pair of negative switches (78, 79) connects the negative input node (72) to negative and central output nodes (74, 75). Preferably, the switches controlled from time to time, in the pair of positive switches (76, 77) and in the pair of negative switches (78, 79), have work cycles interspersed with each other.

## Description

### Technical field

The present invention is developed in the technical field of power network management. In particular, the invention concerns a synchronous static compensator.

### Prior art

It is known in the art that in three-phase electrical networks for the distribution or transmission of electricity, the network voltage can be adjusted by entering or withdrawing reactive power, while the network frequency can be adjusted by entering or withdrawing active power.

A synchronous static compensator, abbreviated as statcom, is an electrical converter that can be connected to a three-phase network to make similar adjustments. In addition to voltage and frequency adjustments, a statcom may also be controlled to deliver reverse sequence currents, in order to preserve a portion of the network from some effects of asymmetric electrical faults that absorb similar currents. A known example of statcom is disclosed in US 8780593.

The most common statcoms are made as multi-level converters, with one or two legs for each electrical phase. The three legs can be connected to each other as a star or as a delta. In some star connections, instead of a single star centre there are a positive pole and a negative pole of a direct current bus.

Each electrical phase includes a series of conversion modules. Each of them is equipped with a capacitor, for normal operation of the module, but without a relevant electrical energy storage capacity. The output voltage of each module is in alternating current, and the output voltage of a statcom phase is obtainable by summing the voltages of the individual modules. In each module, the alternating current output voltage is reversibly converted into the direct current voltage of the capacitor. By alternating the direction of the current in the capacitor, the state of charge is maintained.

With appropriate controls of known type of the conversion modules, it is possible to generate three-phase voltages in output to the statcom such as to enter or withdraw reactive power from the network. In some statcoms, in addition to the capacitors of each module, electrical energy storage elements, such as batteries or supercapacitors, may be provided. In this case, the statcom is also temporarily able to withdraw from, or deliver to the network, active power as long as the state of charge of the storage devices allows it.

In some known examples, the storage elements are all connected to the direct current bus of the statcom, if any, and are therefore concentrated in a separate position from the conversion modules. In other known examples, each conversion module incorporates a respective storage element, and therefore the storage elements are distributed. In the latter case, the storage element can replace the capacitor of the module, or it can be connected directly to it in parallel, or it can be connected to it in parallel with interposition of a dc-dc interface converter.

Various types of interface converters for the distributed storage elements have been proposed in the art, as disclosed for example in US 9099891. An inductor must be placed in the DC-DC converter with the aim of storing energy for the transfer of power between the input and output terminals while supercapacitors are being charged and discharged.

### Problems of the background art

Statcoms with concentrated storage elements have reliability problems, as the inoperability of a single storage element leads to the inoperability of the entire storage. On the other hand, with distributed storages, each conversion module can bypass its own storage element if necessary, in the event of a failure, preserving the operation of the remaining ones.

In addition, statcoms with concentrated storages have the problem of not allowing delta connections, which would have a better management of reverse sequence currents.

In the case of distributed storages, the topology and control of the interface converter determine the intensity and frequency of the current ripple affecting the inductor and the storage element. High current and low switching frequencies require expensive sizing of the inductor.

### Summary of the invention

The object of the present invention is to propose a new statcom with distributed storages.

In particular, it is an object of the invention to allow a less onerous and more flexible sizing of the inductor to be positioned in series with the storage element, and of the switches of the interface converter itself.

These and other objects are achieved by a synchronous static compensator according to any one of the appended claims.

According to the invention the interface converter comprises four switches, positioned substantially in series. On the storage element side, input nodes are identified between the two positive switches and between the two negative switches. On the module capacitor side, there are end output nodes, at the ends of the series of the switches, and a central output node between the positive and pair of negative switches.

This positioning of the switches allows to use switches with a less onerous sizing in terms of voltage, and therefore to increase their current capacity. In addition, the pairs of positive and negative switches can advantageously be controlled according to temporarily mutually interspersed work cycles. Consequently, at the same current ripple intensity, its switching frequency is doubled, and the inductor becomes proportionally more effective in transferring energy from the input to the output of the interface converter and vice versa reducing the corresponding current ripple and ensuring continuous operation. Therefore, inductors with reduced inductance values can be used.

Further features and advantages of the invention will be recognisable by a person skilled in the art from the following detailed disclosure of exemplary embodiments of the invention.

### Brief disclosure of the figures

For a better understanding of the following detailed disclosure, some embodiments of the invention are illustrated in the accompanying drawings, wherein:
- figure 1 schematically shows a synchronous static compensator according to a preferred embodiment of the invention,
- figures 2 and 3 schematically show alternative embodiments of a synchronous static compensator,
- figure 4 schematically shows a conversion module for a synchronous static compensator with storage according to figures 1, 2 or 3,
- figure 5 schematically shows an interface DC/DC converter, a capacitor module and a storage module of the conversion module of figure 4,
- figures 6 and 7 schematically show control states imparted to the DC/DC interface converter, in two different control modes,
- figure 8 shows portions of carrier signals used to control distinct control switches of the interface converter,
- figure 9 shows portions of modulating signals used to control the distinct control switches, and
- figures 10 and 11 show portions of open and close signals for the switches of the interface converter.

### DETAILED DESCRIPTION

A synchronous static compensator is designated overall in the figures with number 1. The compensator 1 is controllable to generate an alternating voltage with a plurality of electrical phases, preferably a three-phase alternating voltage.

The compensator 1 comprises a plurality of phase legs 10, in particular one or more phase legs 10 for each electrical phase. For example, in a three-phase type compensator 1 one or two triads of phase legs 10 may be provided.

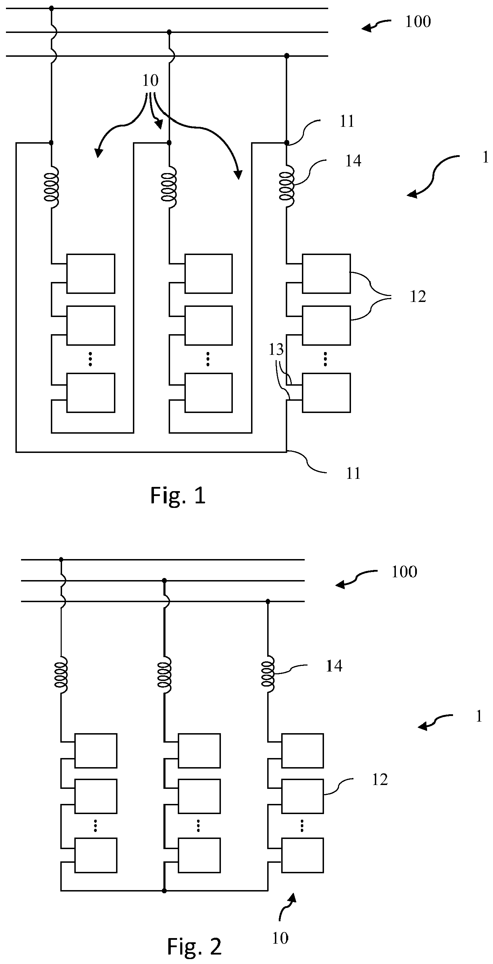

Each phase leg 10 has leg terminals 11. In the preferred embodiment, shown in figure 1, a triad of phase legs 10 are connected in a delta. Thus, for each phase leg 10, distinct leg terminals 11 are connected to other distinct phase legs 11. Each leg terminal 11 between a pair of phase legs 10 constitutes a connection node to a phase of an alternating current electrical network 100.

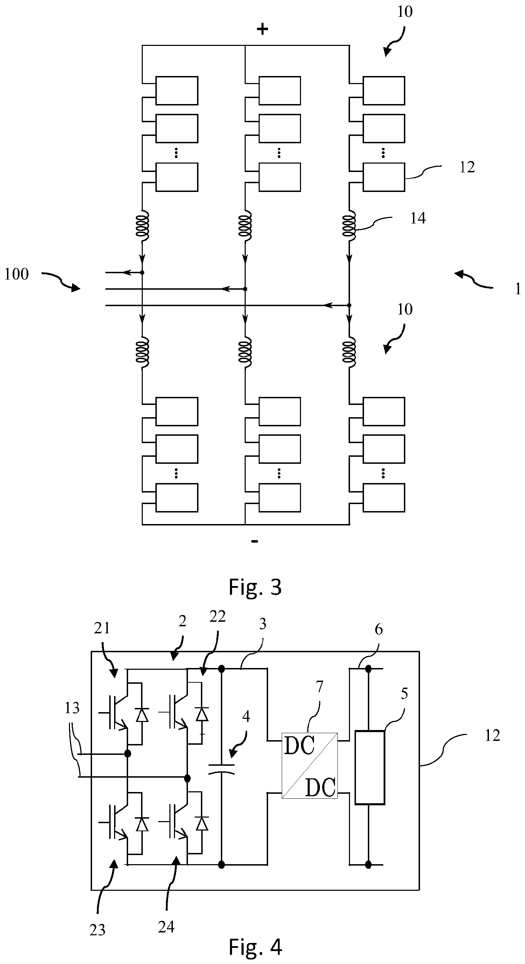

In an alternative embodiment, shown in figure 3, two triads of phase legs 10 are provided, i.e. a positive triad and a negative triad. For the positive triad, a leg terminal 11 is common to all phase legs 10, and constitutes a positive pole of a direct current bus. In addition, each phase leg 10 has a leg terminal 11 that constitutes a connection node to a distinct phase of the electrical network 100. Similarly, for the negative triad a leg terminal 11 is common to all the phase legs 10, and constitutes a negative pole of the direct current bus, and furthermore each phase leg 10 has a leg terminal 11 that constitutes a connection node to a distinct phase of the electrical network 100. Therefore, each triad of phase legs 10 is star-like connected.

In a third embodiment, shown in figure 2, a single triad of phase legs 10 is provided. A leg terminal 11 is common to all phase legs 10, and constitutes a star centre of the compensator 1. In addition, each phase leg 10 has a leg terminal 11 that constitutes a connection node to a distinct phase of the electrical network 100.

In all of these embodiments, each phase leg 10 comprises a plurality of conversion modules 12. Each conversion module 12 has two module terminals 13, and the conversion modules 12 are connected in series with each other at the respective module terminals 13.

Each phase leg 10 also comprises a leg inductor 14, connected in series to the conversion modules 12. Therefore, the voltage of a phase leg 10, in alternating current, is substantially equal to the sum of the voltages of the conversion modules 12, and if provided of the leg inductor 14. Further, the voltage at the module terminals 13 of each conversion module 12 is an alternating current voltage.

In the following, a single conversion module 12 will be disclosed, the characteristics of which shall be understood to be applicable to all conversion modules 12.

The conversion module 12 comprises an electrical output converter 2 connected to the module terminals 13. The output converter 2 is a reversible converter with a direct current side, or input side, and an alternating current side, or output side. The alternating current side is identified by the module terminals 13. The direct current side is located at a capacitor bus 3, to which a capacitor module 4 is connected, disclosed in more detail below.

In the preferred embodiment, the electrical output converter 2 comprises an H-bridge, composed as follows. A pair of positive switches 21, 22 of the H-bridge connects the two distinct module terminals 13 to a positive pole of the capacitor bus 3. A pair of negative switches 23, 24 connects the two distinct module terminals 13 to a negative pole of the capacitor bus 3.

Here and in the following the expression switch is used to indicate a transistor controllable in the opening and closing, preferably an IGBT. Where mention is made of a positive pole and a negative pole of the switch, it will be understood that the transistor, when closed, conducts current from the positive pole to the negative pole. Furthermore, wherever a switch is disclosed, a recirculation diode is to be understood as being connected in parallel to the transistor. The recirculation diode, in an uncontrolled manner, is configured to conduct current from the negative pole towards the positive pole.

Furthermore, the expression switch can be understood as indicating a single transistor, but also a plurality of transistors connected in series so that they share the same current.

In addition, the expression positive switches and negative switches is not intended to indicate switches that are constructively different from each other, but only to designate distinct switches based on their placement in a converter. It is worth noting that the potential at which the poles of each switch are located changes dynamically based on the condition of all the switches of the respective converter, it being understood that the positive pole of the capacitor bus 3 remains at a higher potential than the negative pole of the capacitor bus 3. Furthermore, since the conversion modules 12 are connected in series, under some operating conditions switches indicated as positive in a conversion module 12 may be at a lower potential than switches indicated as negative in a distinct conversion module 12. All this is not only applicable to positive and negative switches of the output converter 2, but also to switches of other converters and capacitors disclosed below.

Thus, for each positive switch 21, 22 of the H-bridge, the respective positive pole is connected to the positive pole of the capacitor bus 3, while the respective negative pole is connected to a distinct module terminal 13. Furthermore, for each negative switch 23, 24 of the H-bridge, the respective positive pole is connected to a distinct module terminal 13, while the respective negative pole is connected to the negative pole of the capacitor bus 3. Each positive switch 21, 22 is connected substantially in series to a respective negative switch 23, 24, although in use they do not share the same current.

In a known manner, a similar example of output converter 2 is controllable so as to develop at the module terminals 13 a voltage instantly equal to the voltage of the capacitor bus 3, to the opposite thereof, or to a substantially zero voltage. Other known examples of output converters 2 can be used by a person skilled in the art to bidirectionally convert voltage between an alternating current side and a direct current side.

As anticipated, the conversion module 12 comprises a capacitor module 4 connected to the capacitor bus 3, and therefore connected to the output converter 2, in particular at the direct current side thereof. The output converter 2 connects the capacitor module 4 to the module terminals 13.

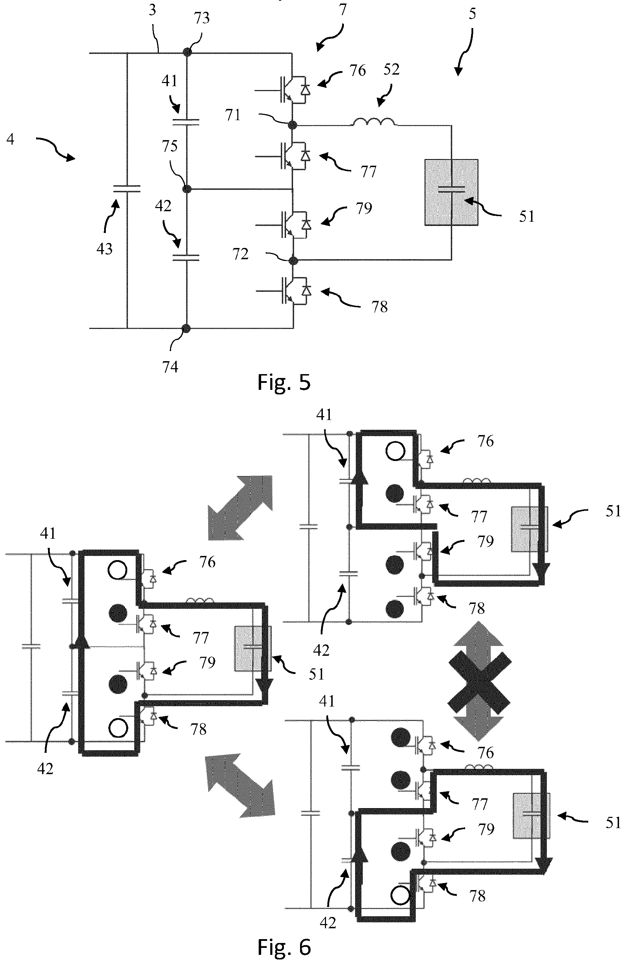

As illustrated in detail in figure 5, and omitted for simplicity's sake from figure 4, the capacitor module 4 comprises a positive capacitor 41 and a negative capacitor 42. The capacitor bus 3 has a central pole between the positive capacitor 41 and the negative capacitor 42. The positive capacitor 41 is connected between the positive pole and the central pole of the capacitor bus 3, while the negative capacitor 42 is connected between the negative pole and the central pole of the capacitor bus 3. Therefore, the positive and negative capacitors 41, 42 are connected substantially in series with each other, although during operation they do not necessarily share the same current.

In the illustrated embodiment, the capacitor module 4 also comprises a further capacitor 43, connected between the positive and negative poles of the capacitor bus 3.

The conversion module 12 comprises a storage module 5. The storage module 5 comprises an electrical energy storage device 51. The storage device 51 has a much higher energy storage capacity than the capacitor module 4.

In the preferred embodiment, the storage device 51 comprises a supercapacitor or a plurality of supercapacitors connected to each other in series and/or in parallel in ways known to those skilled in the art. The invention however is not limited to supercapacitors, but in addition to or in replacement of these the storage device 51 may comprise other types of electrical accumulators, such as for example batteries.

The storage module 5 also comprises a device inductor 52 connected in series to the storage device, with filter function to protect the storage device 51 from current ripple and to store energy for transferring power between input and output of the DC/DC converter. In this disclosure, the terms inductor and inductor device are used to designate a known device with conductive windings wound around a ferromagnetic core, and not simply devices such as a cable which, albeit without windings and magnetic cores, have an intrinsic inductance value.

The storage module 5 is connected to a direct current storage bus 6, distinct from the capacitor bus 3.

The conversion module 12 comprises an electrical interface converter 7 of the dc-dc type, i.e. configured for conversion from direct current to direct current. The interface converter has an input side, connected to the storage bus 6 and therefore to the storage module 5, and an output side, connected to the capacitor bus 3 and therefore to the capacitor module 4 and the output converter 2.

More in detail, the interface converter 7 has two input nodes 71, 72 at the input side, including a positive input node 71 corresponding to a positive pole of the storage bus 6, and a negative input node corresponding to a negative pole of the storage bus 6.

Furthermore, the interface converter 7 has three output nodes 73, 74, 75 at the output side, including a positive output node 73 corresponding to the positive pole of the capacitor bus 3, a negative output node 74 corresponding to the negative pole of the capacitor bus 3, and a central output node 75 corresponding to the central pole of the capacitor bus 3.

According to one aspect of the invention, the interface converter 7 comprises four switches 76, 77, 78, 79, connected substantially in series with each other, although during operation they do not share the same current. In particular, the interface converter 7 comprises a pair of positive switches 76, 77 and a pair of negative switches 78, 79. The pair of positive switches 76, 77 connects the positive input node 71 to the positive output 73 and central 75 nodes, while the pair of negative switches 78, 79 connects the negative input node 72 to the negative output 74 and central 75 nodes.

More in detail, a first switch 76 of the pair of positive switches has the positive pole connected to the positive output node 73 and the negative pole connected to the positive input node 71. A second switch 77 of the pair of positive switches has the positive pole connected to the positive input node 71 and the negative pole connected to the central output node 75. A first switch 78 of the pair of negative switches has the positive pole connected to the negative input node 72 and the negative pole connected to the negative output node 74. A second switch 79 of the pair of negative switches has the positive pole connected to the central output node 75 and the negative pole connected to the negative input node 72.

Thanks to the fact that the four switches are substantially in series, each of them can be sized for a relatively low nominal voltage, for example half of the maximum voltage of the capacitor bus 3. In this way, different models of economic switches are more easily available on the market, even with high current flow rates, and higher switching frequencies are also permissible, obtaining better performance and optimal sizing of the magnets included in the DC/DC converter.

The compensator 1 comprises an electronic control system, not illustrated. The control system may be realized in known manners as a single control unit or a plurality of distinct control units with specific tasks.

The control system is configured to control each interface converter 7, and preferably also each output converter 2. In order to control the converters, the control system is configured in a known way to control the operation of their individual switches, sending them open and close signals. Therefore, each switch is assigned a specific work cycle, consisting of an opening time interval 91, in which the switch is controlled so that the transistor does not conduct current, and a closing time interval 92, in which the switch is controlled so that the transistor conducts current. Each opening interval 91 begins at an opening instant and ends at a closing instant, while each closing interval 92 begins at a closing instant and ends at an opening instant.

It is worth noting that, as is known, successive work cycles of the same switch are not necessarily the same, but the duration of their opening 91 and closing intervals may vary. Furthermore, as is known, in order to obtain a predetermined voltage of a phase leg 10, corresponding switches in corresponding converters of distinct conversion modules 12 can be controlled according to generally different work cycles.

While the control logic of an H-bridge, such as output converters 2, is known to those skilled in the art, the control logic of the interface converters 7 according to an advantageous aspect of the invention is disclosed below.

In the following, the expression control state of an interface converter 7 will be used to designate the combination of the opening and closing conditions of all its switches that is maintained for at least a predetermined time interval, which represents a portion of the work cycles of the switches. The expression control mode will instead be used to designate a sequence of control states.

To avoid short-circuiting the positive and negative capacitors 41, 42, in each control state at least one switch of the pair of positive switches 76, 77 is kept in the open condition, and at the same time at least one switch of the pair of negative switches 78, 79 is kept in the open condition.

The interface converter 7 is suitable to be controlled according to a step-up mode, or boost mode, and a step-down mode, or buck mode. These modes can be alternated at different moments depending on the overall voltage to be obtained in each phase leg 10, the state of charge of the storage device 51 and the power to be exchanged with it.

In the step-up mode, the interface converter 7 is configured to transfer power from the storage bus 6 to the capacitor bus 3, which has higher voltage than the storage bus 6. In the step-down mode, the interface converter 7 is configured to transfer power from the capacitor bus 3 to the storage bus 6. This corresponds respectively to discharging and recharging the storage device 51.

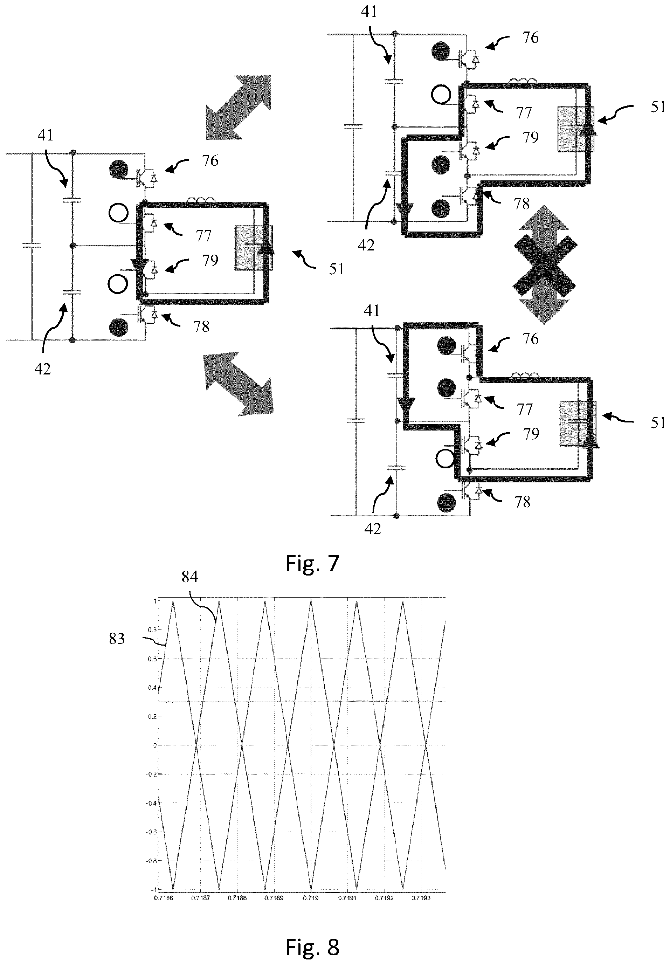

To this end, in the step-up mode, the first switches 76, 78 of the pair of positive switches and the pair of negative switches are kept in an open condition, while the second switches 77, 79 of the pair of positive switches and of the pair of negative switches are opened and closed at a predetermined switching frequency. The conduction states shown in figure 7 are therefore alternated, where the solid dots indicate that the adjacent switch is open, while the empty dots indicate that the adjacent switch is closed.

In the step-down mode, the second switches 77, 79 of the pair of positive switches and of the pair of negative switches are kept open, while the first switches 76, 78 of the pair of positive switches and of the pair of negative switches are opened and closed at the switching frequency. The conduction states shown in figure 6 are therefore alternated.

Here and below, a switch is open and closed at the switching frequency if the duration of its work cycle is substantially equal to a switching period given by the reciprocal of the switching frequency. Conversely, if a switch is kept in an open condition throughout a control mode, its open state is kept for a time equal to a plurality of switching periods.

According to a preferred aspect of the invention, the control system is configured to set mutually interspersed work cycles for one specific switch of the pair of positive switches 76, 77 and one specific switch of the pair of negative switches 78, 79. The interspersed work cycles can be set in at least one control mode, preferably in several control modes, which can be for example the entire duration of the step-up mode and/or the step-down mode, or only a time portion of these modes, which is identified by a plurality of work cycles.

In detail, in the control mode considered from time to time, a positive control switch is selected, chosen between the pair of positive switches 76, 77, and a negative control switch chosen between the pair of negative switches 78, 79. The work cycles of the positive control switch and of the negative control switch are interspersed with each other. Switches that are open and closed at the switching frequency are chosen as positive and negative control switches. For example, in the step-up mode the control switches may be the second switches 77, 79 of the pair of positive switches and of the pair of negative switches. Conversely, in the step-down mode the control switches may be the first switches 76, 78 of the pair of positive switches and of the pair of negative switches.

It is worth noting that the work cycle of each switch, unless it is kept open, is regulated by a comparison between a carrier signal and a modulating signal. While the carrier signal is periodic, e.g. triangular or sawtooth wave, and is repeated in the same way in different work cycles, the modulating signal is variable by the control system depending on the desired output voltage. Each switch can be controlled so that it assumes the closed condition when its modulating signal is greater than its carrier signal, and so that it assumes the open condition when the modulating signal is less than the carrier signal (or vice versa in a different control logic). Therefore, in a known way, increasing the intensity of the modulating signal results in an increase in the time in which this is greater than the carrier signal, and therefore an increase in the closing (or opening) time of the switch, and a different average value of the voltage generated by the converter.

In order to obtain the interspersed work cycles, in the preferred embodiment the distinct carrier signals 83, 84 used for the control of the positive control switch and the negative control switch are temporally out of phase with each other by a time equal to a half switching period, i.e. half of the switching period, as shown in figure 8. Furthermore, the modulating signals 81, 82 used for the control of the positive control switch and the negative control switch may be the same signal, i.e. equal signals synchronous with each other.

Thus, for a modulating signal remaining substantially constant over a switching period, each opening interval 91 of the positive control switch has a common time centre with a respective closing interval 92 of the negative control switch. Further, each opening interval 91 of the negative control switch has a common time centre with a respective closing interval 92 of the positive control switch. The time centre of an opening or closing interval 91, 92 is considered as the time midpoint between the beginning and end instants of the interval.

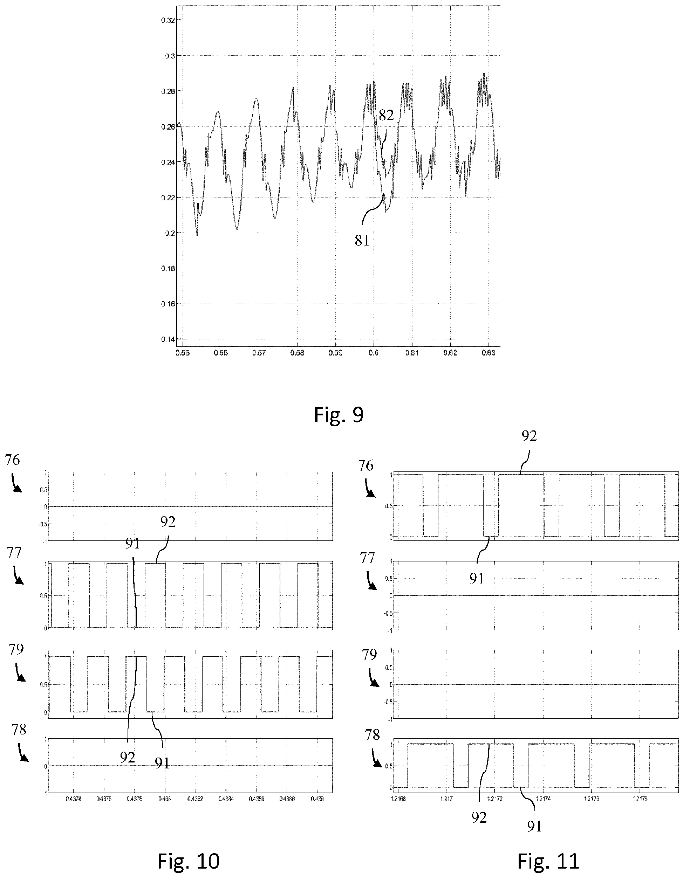

This is shown in figures 10 and 11, respectively for the step-up and step-down modes. In these figures, the signals represented are the signals used for the control of individual switches, each signal designated with the reference number of the relative switch. Each control signal is the result of the comparison between a carrier signal and a modulating signal, assuming distinct values (maximum and null) depending on whether the carrier signal is greater than the modulating signal or vice versa.

Note that preferably, in the step-up and step-down modes, control states are alternated in which all switches 76, 77, 78, 79 of the interface converter 7 are never open at the same time. From this condition, considered together with the chosen carrier and modulating signals, a further condition is verified whereby each opening interval 91 of the positive control switch is temporarily contained within a respective closing interval 92 of the negative control switch. Further, each opening interval 91 of the positive control switch is temporarily contained within a respective closing interval 92 of the positive control switch.

This latter interspersing condition, with opening and closing intervals contained between them for different switches, can be verified even where, under real conditions, the condition of common time centre mentioned above is not verified.

The interspersing conditions disclosed, when compared with a normal control of a converter without interspersing, with the same current ripple, double its frequency. Since the impedance of the inductor 52 is proportional to the frequency, the same effect of protection from a current ripple, at the same transferred power, can be obtained with half inductance, and therefore with lower costs and dimensions.

As an alternative to the above, the carrier signals 83, 84 for the two positive and negative control switches may be opposite to each other, instead of being out of phase by a switching half period. These two alternatives may or may not coincide depending on the chosen carrier signals.

Furthermore, under certain conditions the modulating signals 81, 82, for the two positive and negative control switches, may not be the same between them as disclosed above. In particular, they can be kept synchronous with each other, but differ by a predetermined intensity offset, as visible in figure 9, where for simplicity of illustration one of the modulating signals 82 is shown as greater than the other modulating signal 81 only for a short time interval.

More in detail, the control system may be configured so as to measure states of charge of the positive and negative capacitors 41, 42. This represents only one of several measures that can be carried out by the control system. The control system is therefore configured to make the modulating signals 81, 82 of the positive and negative control switches equal, when states of charge of the positive capacitor 41 and of the negative capacitor 42 are substantially equal to each other. Instead, the control system may be configured to introduce an intensity offset between such modulating signals, when the states of charge of the positive capacitor 41 and of the negative capacitor 42 are different from each other.

The intensity offset alters the durations of the opening and closing intervals 91, 92 of the control switches, resulting in a more or less prolonged passage of current in the positive and negative capacitor 41, 42. Therefore, with an appropriate selection of offsets, such as to make one modulating signal greater or lesser than the other, a rebalancing of the states of charge of the positive and negative capacitors 41, 42 is obtained. The offset sign and intensity may depend, in addition to the positive and negative states of charge 41, 42, also on the direction and intensity of the current exchanged with the storage device 51.

## Claims

1. Synchronous static compensator (1), comprising a plurality of phase legs (10), connected to each other according to a star or delta configuration and connectable to an alternating current electrical network (100), wherein:
- each phase leg (10) comprises a plurality of conversion modules (12) each having two module terminals (13), the conversion modules (12) being connected in series with each other at the respective module terminals (13),
- each conversion module (12) comprises:
- a capacitor module (4),
- an electrical output converter (2) connecting the capacitor module (4) to the module terminals (13),
- a storage module (5), comprising an electrical energy storage device (51) and an inductor device (52) connected in series with each other, and
- an electrical interface converter (7), comprising input nodes (71, 72), for connection to the storage module (5), and output nodes (73, 74, 75), for connection to the capacitor module (4),
**characterised in that:**
- the input nodes (71, 72) of each interface converter (7) comprise a positive input node (71) and a negative input node (72), and the output nodes (73, 74, 75) of each interface converter (7) comprise a positive output node (73), a negative output node (74), and a central output node (75), and
- each interface converter (7) comprises a pair of positive switches (76, 77), which connects the positive input node (71) to the positive and central output nodes (73, 75), and a pair of negative switches (78, 79), which connects the negative input node (72) to the negative and central output nodes (74, 75).

2. Synchronous static compensator (1) according to claim 1, wherein:
- a first switch (76) of the pair of positive switches (76, 77) of each interface converter (7) is connected between the positive output node (73) and the positive input node (71),
- a second switch (77) of the pair of positive switches (76, 77) of each interface converter (7) is connected between the central output node (75) and the positive input node (71),
- a first switch (78) of the pair of negative switches (78, 79) of each interface converter (7) is connected between the negative output node (74) and the negative input node (72), and
- a second switch (79) of the pair of negative switches (78, 79) of each interface converter (7) is connected between the central output node (75) and the negative input node (72).

3. Synchronous static compensator (1) according to claim 1 or 2, wherein the storage device (51) of each storage module (5) comprises one or more supercapacitors.

4. Synchronous static compensator (1) according to any of claims 1 to 3, wherein each output electrical converter (2) comprises an H-bridge, in particular each H-bridge comprising:
- a pair of positive switches (21, 22), which connects the module terminals (13) to the positive output node (73) of the respective interface converter (7), and
- a pair of negative switches (23, 24), which connects the module terminals (13) to the negative output node (74) of the respective interface converter (7).

5. Synchronous static compensator (1) according to any of claims 1 to 4, wherein each capacitor module (4) comprises a positive capacitor (41), connected between the positive output node (73) and the central output node (75) of the respective interface converter (7), and a negative capacitor (42), connected between the negative output node (74) and the central output node (75) of the respective interface converter (7).

6. Synchronous static compensator (1) according to any of claims 1 to 5, comprising a control system, configured to control switches of each interface converter (7) according to predetermined work cycles with opening intervals and closing intervals (91, 92).

7. Synchronous static compensator (1) according to the combination of claims 2 and 6, wherein the control system is configured to control each interface converter (7) at different times, respectively, according to a step-up mode and a step-down mode, wherein:
- in the step-up mode, the first switches (76, 78) of the pair of positive switches (76, 77) and of the pair of negative switches (78, 79) are kept in the open condition, while the second switches (77, 79) of the pair of positive switches (76, 77) and of the pair of negative switches (78, 79) are opened and closed at a switching frequency, and
- in the step-down mode, the second switches (77, 79) of the pair of positive switches (76, 77) and of the pair of negative switches (78, 79) are kept in the open condition, while the first switches (76, 78) of the pair of positive switches (76, 77) and of the pair of negative switches (78, 79) are opened and closed at the switching frequency.

8. Synchronous static compensator (1) according to claim 6 or 7, wherein the control system, in at least one control mode, is configured to set duty cycles interspersed with each other, for a positive control switch selected from the pair of positive switches (76, 77) of each interface converter (7), and for a negative control switch selected from the pair of negative switches (78, 79) of each interface converter (7).

9. Synchronous static compensator (1) according to claim 8, in which the interspersed work cycles are such that:
- each opening interval (91) of the positive control switch is temporally contained within, and preferably has a common time centre with, a respective closing interval (92) of the negative control switch, and
- each opening interval (91) of the negative control switch is temporally contained within, and preferably has a common time centre with, a respective closing interval (92) of the positive control switch.

10. Synchronous static compensator (1) according to claim 8 or 9, wherein the control system is configured to control the positive control switch and the negative control switch by means of a comparison between:
- respective carrier signals (83, 84), which are opposite or temporally out of phase with each other for a half switching period, and
- respective modulating signals (81, 82), synchronous with each other.

11. Synchronous static compensator (1) according to the combination of claims 5 and 10, wherein the control system is configured for:
- making said modulating signals (81, 82) equal, when states of charge of the positive capacitor (41) and the negative capacitor (42) of the respective capacitor module (4) are substantially equal to each other, and
- introducing an intensity offset between said modulating signals (81, 82), when the states of charge of the positive capacitor (41) and the negative capacitor (42) of the respective capacitor module (4) are different from each other.
